# EUROPEAN PATENT APPLICATION

(11) **EP 4 554 270 A1**
(43) Date of publication of application: **14.05.2025**
(21) Application number: 22949813.4
(22) Date of filing: 06.07.2022
(51) Int. Cl.: H04W 24/02

(54) **COMMUNICATION METHOD AND APPARATUS, DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/104242
(87) International publication number: WO 2024/007227

(57) **Abstract**

The embodiments of the present application belong to the technical field of communications. Provided are a communication method and apparatus, a device, and a storage medium, which can be applied to a sensing by proxy (SBP) responding device. The method comprises: determining a first SBP report frame (S41), wherein in the case where the lengths of aggregated media access control (MAC) protocol data unit (A-MPDU) frames, which are determined according to all sensing measurement results of wireless local area network (WLAN) sensing measurement, exceed a preset length, the first SBP report frame indicates, by means of first indication information, that the first SBP report frame comprises some of the sensing measurement results of the WLAN sensing measurement; and sending the first SBP report frame (S42). The embodiments of the present application can provide a method for sending an SBP report frame.

## Description

### TECHNICAL FIELD

The embodiments of the present disclosure relate to the field of communication technology, and specifically, the embodiments of the present disclosure relate to a communication method, apparatus, device and storage medium.

### BACKGROUND

With the rapid development of mobile communication technology, Wireless Fidelity (Wi-Fi) technology has made great progress in transmission rate and throughput.

In the Wi-Fi technologies currently under study, Wireless Local Area Network (WLAN) sensing technology may be supported. For example, there are application scenarios such as location discovery, proximity detection, and presence detection in dense environments (for example, home environments and corporate environments). In the WLAN Sensing process, a station device (Station, STA) and an access point device (Access Point, AP) can both serve as an initiating device, where AP can communicate with multiple STAs simultaneously, but STA does not have this function and can only communicate one-to-one with a single responding device. Therefore, a method of initiating sensing measurements using AP on behalf of STAs is proposed. However, it is still not determined how the AP proxy sends the sensing measurement results to the initiating device STA.

### SUMMARY

The embodiments of the present disclosure provide a communication method, an apparatus, a device, and a storage medium, which can provide a scheme of sending an SBP report frame.

In a first aspect, an embodiment of the present disclosure provides a communication method, which can be applied to an SBP responding device, and the method includes:
determining a first SBP report frame, where when a length of an aggregated media access control protocol data unit (A-MPDU) frame determined according to all sensing measurement results of wireless local area network (WLAN) sensing measurement exceeds a preset length, the first SBP report frame indicates through first indication information that the first SBP report frame includes part of the sensing measurement results of the WLAN sensing measurement; and
sending the first SBP report frame.

In a second aspect, an embodiment of the present disclosure provides a communication method, which can be applied to an SBP initiating device, and the method includes:
receiving a SBP report frame, where when a length of an aggregated media access control protocol data unit (A-MPDU) frame determined based on all sensing measurement results of a wireless local area network (WLAN) sensing measurement exceeds a preset length, the first SBP report frame indicates through first indication information that the first SBP report frame includes part of the sensing measurement results of the WLAN sensing measurement.

In a third aspect, an embodiment of the present disclosure further provides a communication apparatus, the device including:
a determining unit, configured to determine a first SBP report frame, where when a length of an aggregated media access control protocol data unit (A-MPDU) frame determined according to all sensing measurement results of a wireless local area network (WLAN) sensing measurement exceeds a preset length, the first SBP report frame indicates through first indication information that the first SBP report frame includes part of the sensing measurement results of the WLAN sensing measurement; and
a sending unit, configured to send the first SBP report frame.

In a fourth aspect, an embodiment of the present disclosure further provides a communication apparatus, the device including:
a receiving unit, configured to receive a first SBP report frame, where when a length of an aggregated media access control protocol data unit (A-MPDU) frame determined according to all sensing measurement results of a wireless local area network (WLAN) sensing measurement exceeds a preset length, the first SBP report frame indicates through first indication information that the first SBP report frame includes part of the sensing measurement results of the above-mentioned WLAN sensing measurement.

In a fifth aspect, an embodiment of the present disclosure further provides an SBP responding device, including a memory, a processor, and a computer program that is stored in the memory and executable on the processor, where the processor, when executing the program, implements the communication method provided in the first aspect of the embodiments of the present disclosure.

In a sixth aspect, an embodiment of the present disclosure further provides an SBP initiating device, including a memory, a processor, and a computer program that is stored in the memory and executable on the processor, wherein the processor, when executing the program, implements the communication method provided in the second aspect of the embodiments of the present disclosure.

In a seventh aspect, an embodiment of the present disclosure further provides a computer-readable storage medium, on which a computer program is stored, and the computer program, when being executed by a processor, implements any of the communication methods provided in the embodiments of the present disclosure.

In the embodiments of the present disclosure, an SBP responding device may send a first SBP report frame to an SBP initiating device when a length of an A-MPDU frame determined based on all sensing measurement results of the WLAN sensing measurement exceeds a preset length, and indicate through first indication information that the first SBP report frame includes part of the sensing measurement results of the WLAN sensing measurement.

Additional aspects and advantages of the embodiments of the present disclosure will be partially provided in the description below, which will become apparent from the description below, or will be learned through the practice of the present disclosure.

### BRIEF DESCRIPTION OF THE DRAWINGS

In order to more clearly illustrate the technical solutions of the embodiments of the present disclosure, the drawings for use in the description of the embodiments of the present disclosure will be briefly introduced below. Obviously, the drawings in the following description are only some embodiments of the present disclosure. For those of ordinary skill in the art, other drawings can be obtained based on these drawings without creative work.
FIG. 1 is a schematic diagram of an architecture for a WLA sensing measurement provided in an embodiment of the present disclosure;
FIG. 2 is a schematic diagram of communication connections provided in an embodiment of the present disclosure;
FIG. 3 is another schematic diagram of an architecture for a WLA sensing measurement provided in an embodiment of the present disclosure;
FIG. 4 is a flow chart of a communication method provided in an embodiment of the present disclosure;
FIG. 5 is another flow chart of a communication method provided in an embodiment of the present disclosure;
FIG. 6 is a schematic structural diagram of a communication apparatus provided in an embodiment of the present disclosure;
FIG. 7 is another schematic structural diagram of a communication apparatus provided in an embodiment of the present disclosure; and
FIG. 8 is a schematic structural diagram of an electronic device provided in an embodiment of the present disclosure.

### DETAILED DESCRIPTION

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after this character are in an "or" relationship.

The term "multiple" in the embodiments of the present disclosure refers to two or more than two, and other quantifiers are similar thereto.

Illustrative embodiments will be described in detail herein, examples of which are shown in the accompanying drawings. When the following description refers to the drawings, the same numerals in different drawings represent the same or similar elements unless otherwise indicated. The embodiments described in the following illustrative embodiments do not represent all embodiments consistent with the present disclosure. Instead, they are merely examples of devices and methods consistent with some aspects of the present disclosure as detailed in the appended claims.

The terms used in the present disclosure are for the purpose of describing specific embodiments only and are not intended to limit the present disclosure. The singular forms "a", "said" and "the" used in the present disclosure and the appended claims are also intended to include plural forms unless the context clearly indicates otherwise. It should also be understood that the term "and/or" used herein refers to and includes any or all possible combinations of one or more associated listed items.

It should be understood that although the terms first, second, third, etc. may be used in the present disclosure to describe various information, such information should not be limited to these terms. These terms are only used to distinguish the same type of information from each other. For example, without departing from the scope of the present disclosure, the first information may also be referred to as the second information, and similarly, the second information may also be referred to as the first information. Depending on the context, for example, the word "if" used herein may be interpreted as "in a case where" or "when" or "in response to determining".

The technical solutions in the embodiments of the present disclosure will be clearly and completely described below in connection with the drawings in the embodiments of the present disclosure. Obviously, the described embodiments are only part of the embodiments of the present disclosure, not all of the embodiments. Based on the embodiments in the present disclosure, all other embodiments obtained by those of ordinary skill in the art without making creative work fall within the protection scope of the present disclosure.

The method and apparatus are based on the same inventive concept. Since the principles of solving problems by the method and the apparatus are similar, the implementations of the apparatus and the method can refer to each other, and the repeated parts will be omitted here.

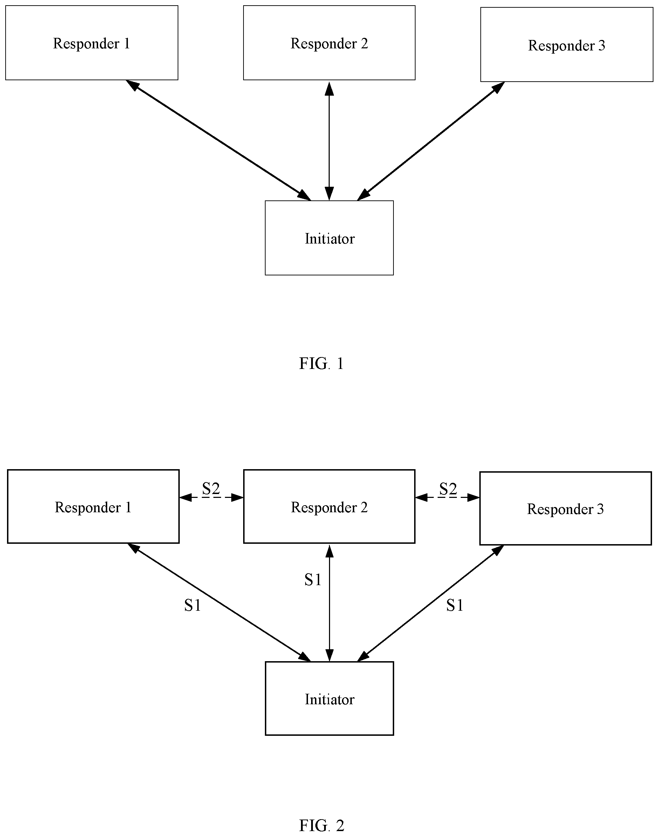

As a first example, referring to FIG. 1 to FIG. 3, an architecture for a WLAN sensing measurement and a WLAN sensing measurement process applied by a communication method provided in an embodiment of the present disclosure are first introduced.

FIG. 1 is a schematic diagram showing the architecture for a WLA sensing measurement, where a sensing initiator initiates a WLAN sensing measurement (e.g., initiates a WLAN sensing measurement session), and there may be multiple sensing responders responding to it, such as responders 1, 2, and 3 as shown in FIG. 2. When the sensing initiator initiates the WLAN sensing measurement, multiple associated or unassociated sensing responders for the WLAN sensing measurement may respond.

Herein, "associated" may refer to that an initial associated connection for communication is established between the sensing initiator and the sensing responder, and "unassociated" may refer to that there is no initial associated connection for communication established between the sensing initiator and the sensing responder.

Referring to FIG. 2, the sensing initiator communicates with the sensing responder via a communication connection, such as communication connection S1 as shown; the sensing responders communicate with each other via a communication connection S2.

Each sensing initiator can be a client, and each sensing responder (in this example, sensing responder 1 to sensing responder 3) can be a station (STA) or access point device (AP) device. In addition, the STA and AP can serve multiple roles in the WLAN sensing measurement process; for example, in the WLAN sensing measurement process, the STA can also serve as a sensing initiator, and the sensing initiator can be a sensing transmitter, a sensing receiver, or both, or neither. In the WLAN sensing measurement process, the sensing responder may also be a sensing transmitter, a sensing receiver, or both.

The AP is a wireless switch for a wireless network and also an access device of the wireless network. The AP may include a software application and/or circuit so that other types of nodes in the wireless network can communicate outside and inside the wireless network through the AP. As an example, the AP may be a terminal device or a network device equipped with a Wi-Fi chip.

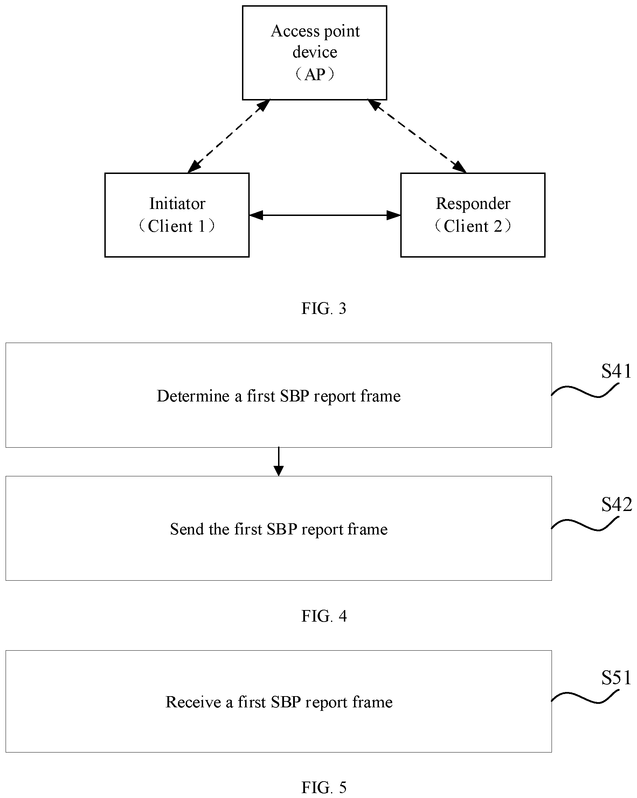

As another architecture, as shown in FIG. 3, the sensing initiator and the sensing responder can both be clients, and the two can communicate with each other by connecting to the same access point device (AP). In FIG. 3, Client 1 is the sensing initiator, and Client 2 is the sensing responder.

In the WLAN sensing measurement process, in order to achieve one-to-many communication between the STA serving as the sensing initiator and the sensing responders, the STA acts as a Sensing By Proxy (SBP) initiator (the SBP initiator is used as an example in the following description) to initiate the SBP process; the AP acts as an SBP responder (the SBP responder is used as an example in the following description) to perform WLAN sensing measurement on behalf of the STA.

The SBP initiating device and the SBP responding device may include but are not limited to: a cellular phone, a smart phone, a wearable device, a computer, a personal digital assistant (PDA), a personal communication system (PCS) device, a personal information manager (PIM), a personal navigation device (PND), a global positioning system, a multimedia device, an Internet of Things (IoT) device, etc.

A communication method provided by an embodiment of the present disclosure may be specifically referred to in FIG. 4, which is a flow chart of a communication method provided by an embodiment of the present disclosure. Optionally, the method may be applied to a Sensing By Proxy (SBP) responding device, the SBP responding device may be an access point AP device. The method may include the following steps.

In step S41, a first SBP report frame is determined.

After obtaining sensing measurement results of all the station devices (STAs) participating in the WLAN sensing measurement, the SBP responding device may first determine whether a length of an A-MPDU frame determined according to all the sensing measurement results exceeds a preset length.

In a case where the A-MPDU frame determined according to all the sensing measurement results exceeds the preset length, the first SBP report frame indicates through first indication information that the first SBP report frame includes part of the sensing measurement results of the WLAN sensing measurement, that is, the first SBP report frame indicates through the first indication information that the SBP initiating device needs to receive the remaining sensing measurement results sent by the SBP responding device later. In this case, the first SBP report frame includes the sensing measurement results of some of the STAs participating in the WLAN sensing measurement.

The preset length corresponding to the A-MPDU frame can be the maximum length of the A-MPDU frame specified by a protocol, or the maximum length of a message frame that the SBP initiator can receive, or a length negotiated by the SBP initiator and the SBP responder during the WLAN sensing measurement establishment process, which is not limited here.

According to protocol's specification, the maximum length of an A-MPDU in a high-throughput (HT) physical layer protocol data unit (PPDU) is 65535 octets. The maximum length of an A-MPDU in a directional multi-gigabit (DMG) PPDU is 262143 octets. The maximum length of padding before an end of frame (EOF) field of an A-MPDU in a very high-throughput (VHT) PPDU is 1048575 octets. The maximum length of padding before the end of frame field of an A-MPDU in a high-efficiency (HE) PPDU is 6500631 octets. The maximum length of an A-MPDU in an enhanced directional multi-gigabit (EDMG) PPDU is 4194303 octets. The maximum length of the padding before the end of frame field of an A-MPDU in an extremely high throughput (EHT) PPDU is 15523200 octets. In step S42, the first SBP report frame is sent.

After determining the first SBP report frame, the SBP responding device sends the first SBP report frame to the SBP initiating device.

In an embodiment of the present disclosure, the SBP responding device may send the first SBP report frame in the case where the length of the A-MPDU frame determined based on all sensing measurement results of the WLAN sensing measurement exceeds the preset length, and indicate through the first indication information that the first SBP report frame includes part of the sensing measurement results of the WLAN sensing measurement.

In the communication method applied to the SBP responding device provided in the present disclosure, in the case where the length of the A-MPDU frame determined according to all the sensing measurement results of the WLAN sensing measurement exceeds the preset length, after the SBP responding device sends the first SBP report frame, the method also includes:
determining a second SBP report frame, where the second SBP report frame includes remaining sensing measurement results of the WLAN sensing measurement; and
sending the second SBP report frame.

That is, in the case where the length of the A-MPDU frame determined based on all the sensing measurement results of the WLAN sensing measurement exceeds the preset length, the SBP responding device sends the first SBP report frame to the SBP initiating device, and indicates through the first indication information that the first SBP report frame includes part of the sensing measurement results of the WLAN sensing measurement.

Further, the SBP responding device determines the second SBP report frame and sends the second SBP report frame including the remaining sensing measurement results of the WLAN sensing measurement to the SBP initiating device, so as to send all the sensing measurement results of the WLAN sensing measurement to the SBP initiating device through the first SBP report frame and the second SBP report frame.

In the communication method applied to the SBP responding device provided in the present disclosure, the first indication information is at least one of first identification information or second identification information.

The first identification information is used to indicate the number of the sensing measurement results included in the first SBP report frame. And in the case where the length of the A-MPDU frame determined according to all the sensing measurement results of the WLAN sensing measurement exceeds the preset length, the number of the sensing measurement results included in the first SBP report frame is less than the number of all STAs participating in the WLAN sensing measurement.

That is, while the SBP responding device indicates through the first identification information that the number of the sensing measurement results included in the first SBP report frame is less than the number of all STAs participating in the WLAN sensing measurement, it also indicates that the SBP responding device will subsequently send the remaining sensing measurement results to the SBP initiating device, to indicate that the SBP initiating device needs to subsequently continue to receive the sensing measurement results sent by the SBP responding device.

The first identification information may be identified by at least one bit, for example, 3 bits may be used to identify the number of the sensing measurement results included in the first SBP report frame.

The second identification information is used to indicate the SBP initiating device to receive the second SBP report frame after receiving the first SBP report frame, and the second SBP report frame includes the remaining sensing measurement results of the WLAN sensing measurement.

In the case where the length of the A-MPDU frame determined based on all sensing measurement results of the WLAN sensing measurement exceeds the preset length, the first SBP report frame may include first identification information and/or second identification information, so as to indicate through the first identification information and/or the second identification information that the first SBP report frame includes only part of the sensing measurement results of the WLAN sensing measurement, and thereby indicate that the SBP initiating device needs to subsequently receive the sensing measurement results sent by the SBP responding device again.

The second identification information may be identified by at least one bit, for example, one bit may be used to identify that the second SBP report frame is sent after the first SBP report frame is sent.

In the communication method applied to the SBP responding device provided in the present disclosure, the second SBP report may also include identification information for indicating the number of the sensing measurement results included in the second SBP report frame, and it may also be identified by at least one bit.

In the communication method applied to the SBP responding device provided in the present disclosure, in the case where the length of the A-MPDU frame determined according to all sensing measurement results of the WLAN sensing measurement does not exceed the preset length, the first SBP report frame includes third identification information.

The third identification information is used to indicate the number of the sensing measurement results included in the first SBP report frame, and the number of the sensing measurement results included in the first SBP report frame is consistent with the number of all STAs participating in the WLAN sensing measurement.

That is, in the case where the length of the A-MPDU frame determined according to all sensing measurement results of the WLAN sensing measurement exceeds the preset length, the first SBP report frame indicates through the third identification information that the first SBP report frame includes the sensing measurement results of all STAs participating in the WLAN sensing measurement.

The third identification information may be identified by at least one bit, for example, 3 bits may be used to identify the number of the sensing measurement results included in the first SBP report frame.

In the communication method applied to the SBP responding device provided in the present disclosure, the first SBP report frame also includes fourth identification information corresponding to each sensing measurement result included in the first SBP report frame, and each fourth identification information is used to indicate the STA corresponding to the sensing measurement result corresponding to this identification information.

For the SBP initiating device, after receiving the first SBP report frame, the SBP initiating device may determine the STA corresponding to each sensing measurement result according to the fourth identification information corresponding to each sensing measurement result included in the first SBP report frame.

The fourth identification information of each sensing measurement result can correspond to an independent identification bit.

Each fourth identification information may be a User Identifier (UID), a Media Access Control (MAC) address, or an Association Identifier (AID) if association with SBP responding device is established, of the STA corresponding to the respective sensing measurement result. That is, each fourth identification information may indicate the STA corresponding to the respective sensing measurement result through any one of AID, UID or MAC address.

Optionally, when each fourth identification information is UID or MAC, it may also be used to indicate that the association is not established between the STA corresponding to the sensing measurement result corresponding to the fourth identification information and the SBP responding device.

In the communication method applied to the SBP responding device provided in the present disclosure, the second SBP report frame also includes fifth identification information corresponding to each sensing measurement result included in the second SBP report frame, and each fifth identification information is used to indicate the STA corresponding to the sensing measurement result corresponding to this identification information.

For the SBP initiating device, after receiving the second SBP report frame, the SBP initiating device may determine the STA corresponding to each sensing measurement result according to the fifth identification information corresponding to each sensing measurement result included in the second SBP report frame.

The fourth identification information of each sensing measurement result may correspond to an independent identification bit.

Each fifth identification information can be any one of a UID, a MAC address, or an AID if association with the SBP responding device is established, of the STA corresponding to the respective sensing measurement result. That is, each fifth identification information can indicate the STA corresponding to the respective sensing measurement result through any one of the AID, UID, or MAC address.

Optionally, when each fifth identification information is the UID or MAC, it may also be used to indicate that an association is not established between the STA corresponding to the sensing measurement result corresponding to the fifth identification information and the SBP responding device.

In the communication method applied to the SBP responding device provided in the present disclosure, the first SBP report frame and the second SBP report frame are A-MPDU frames.

Specifically, in the case where the length of the A-MPDU frame determined according to all sensing measurement results of the WLAN sensing measurement exceeds the preset length, the SBP responding device first determines a first A-MPDU frame according to part of the sensing measurement results of the WLAN sensing measurement, and sends the first A-MPDU frame to the SBP initiating device.

The length of the first A-MPDU frame does not exceed a preset length.

The first A-MPDU frame may indicate, through the first indication information, that the first A-MPDU frame includes part of the sensing measurement results of the WLAN sensing measurement.

The first indication information of the first A-MPDU frame may be first identification information used to indicate that the number of the sensing measurement results included in the first A-MPDU frame is less than the number of all STAs participating in the WLAN sensing measurement, and/or used to indicate the SBP initiating device to receive a second A-MPDU frame after receiving the first A-MPDU frame, where the second A-MPDU frame includes the remaining sensing measurement results of the WLAN sensing measurement.

The first A-MPDU frame includes fourth identification information corresponding to each sensing measurement result, and each fourth identification information is used to indicate the STA corresponding to the respective sensing measurement result.

Further, after sending the first A-MPDU frame, the SBP responding device determines the second A-MPDU frame according to the remaining sensing measurement results of the WLAN sensing measurement, and sends the second A-MPDU frame to the SBP initiating device.

The second A-MPDU frame includes fifth identification information corresponding to each sensing measurement result, and each fifth identification information is used to indicate the STA corresponding to the respective sensing measurement result.

Optionally, in the case where the length of the A-MPDU frame determined according to all sensing measurement results of the WLAN sensing measurement does not exceed the preset length, the SBP responding device first determines a first A-MPDU frame according to all sensing measurement results of the WLAN sensing measurement, and sends the first A-MPDU frame to the SBP initiating device.

That is, the first A-MPDU frame includes all the sensing measurement results of the WLAN sensing measurement.

The first A-MPDU frame includes fourth identification information corresponding to each sensing measurement result, and each fourth identification information is used to indicate the STA corresponding to the respective sensing measurement result.

In the communication method applied to the SBP responding device provided in the present disclosure, before the SBP responding device determines the first SBP report frame, the method further includes:
sending to each STA participating in the WLAN sensing measurement a Trigger Frame (TF) used for obtaining a downlink sensing measurement result of each STA; and
further, obtaining the sensing measurement result of each STA participating in the WLAN sensing measurement.

That is, the SBP responding device obtains the sensing measurement result of each STA participating in the WLAN sensing measurement by sending the TF frame to each STA participating in the WLAN sensing measurement, and then determines the first SBP reporting frame according to the obtained sensing measurement results.

In the communication method applied to the SBP responding device provided in the present disclosure, in the case where the length of the A-MPDU frame determined according to all sensing measurement results of the WLAN sensing measurement exceeds the preset length, the SBP responding device will send a second SBP report frame after sending the first SBP report frame.

In the case where the length of the A-MPDU frame determined based on the remaining sensing measurement results except the sensing measurement results included in the first SBP report frame still exceeds the preset length, the second SBP report frame may indicate through second indication information that the number of the sensing measurement results included in the first SBP report frame and the second SBP report frame is less than the number of all STAs participating in the WLAN sensing measurement.

The second indication information may be at least one of sixth identification information, seventh identification information or eighth identification information.

The sixth identification information is used to indicate that the SBP initiating device needs to receive the sensing measurement results sent by the SBP responding device again after receiving the second SBP report frame. In this case, the SBP responding device will send a third SBP report frame again after sending the second SBP report frame so as to send the final remaining sensing measurement results to the SBP initiating device.

The seventh identification information is used to indicate identification information of the number of the sensing measurement results included in the second SBP report frame. In this case, after receiving the first SBP report frame and the second SBP report frame, the SBP initiating device compares the number of the sensing measurement results included in both the first SBP report frame and the second SBP report frame with the number of all STAs participating in the WLAN sensing measurement, and when the number of the sensing measurement results included in both the first SBP report frame and the second SBP report frame is less than the number of all STAs participating in the WLAN sensing measurement, it determines that it needs to receive the sensing measurement results sent by the SBP responding device again.

The eighth identification information is used to indicate the number of the sensing measurement results included in the first SBP report frame and the second SBP report frame, and this number is smaller than the number of all STAs participating in the WLAN sensing measurement.

Further, after sending the second SBP report frame, the SBP responding device sends a third SBP report frame, and the third SBP report frame includes the final remaining sensing measurement results.

The third SBP report frame may be an A-MPDU frame.

The third SBP report frame may include ninth identification information corresponding to each sensing measurement result included in the third SBP report frame, and each ninth identification information is used to indicate the STA corresponding to the respective sensing measurement result.

A communication method provided by an embodiment of the present disclosure may be specifically referred to in FIG. 5, which is another flow chart of the communication method provided in an embodiment of the present disclosure. Optionally, the method may be applied to a Sensing By Proxy (SBP) initiating device, where the SBP initiating device may be a station device (STA). The method may include the following steps.

In Step S51, a first SBP report frame is determined.

In a case where an A-MPDU frame determined according to all sensing measurement results exceeds a preset length, the first SBP report frame indicates through first indication information that the first SBP report frame includes part of the sensing measurement results of the WLAN sensing measurement, that is, the first SBP report frame indicates through the first indication information that the SBP initiating device needs to receive the remaining sensing measurement results sent by the SBP responding device again later. In this case, the first SBP report frame includes the sensing measurement results of some of the STAs participating in the WLAN sensing measurement.

The preset length corresponding to the A-MPDU frame can be the maximum length of the A-MPDU frame specified by a protocol, or the maximum length of a message frame that the SBP initiating device can receive, or a length negotiated by the SBP initiating device and the SBP responding device during a WLAN sensing measurement establishment process, which is not limited here.

According to protocol's specification, the maximum length of an A-MPDU in a HT PPDU is 65535 octets. The maximum length of an A-MPDU in a DMG PPDU is 262143 octets. The maximum length of padding before an end of frame field of an A-MPDU in a VHT PPDU is 1048575 octets. The maximum length of padding before the end of frame field of an A-MPDU in a HE PPDU is 6500631 octets. The maximum length of an A-MPDU in an EDMG PPDU is 4194303 octets. The maximum length of the padding before the end of frame field of an A-MPDU in an EHT PPDU is 15523200 octets.

In an embodiment of the present disclosure, the SBP initiating device may receive the first SBP report frame sent by the SBP responding device in the case where the length of the A-MPDU frame determined according to all sensing measurement results of the WLAN sensing measurement exceeds the preset length, so as to determine through first indication information that the first SBP report frame includes part of the sensing measurement results of the WLAN sensing measurement.

In the communication method applied to the SBP initiating device provided in the present disclosure, in the case where the length of the A-MPDU frame determined according to all the sensing measurement results of the WLAN sensing measurement exceeds the preset length, after the SBP initiating device receives the first SBP report frame, it also includes:
receiving a second SBP report frame, where the second SBP report frame includes remaining sensing measurement results of the WLAN sensing measurement.

That is, in the case where the length of the A-MPDU frame determined according to all sensing measurement results of the WLAN sensing measurement exceeds the preset length, the SBP responding device sends the first SBP report frame to the SBP initiating device, and indicates through the first indication information that the first SBP report frame includes part of the sensing measurement results of the WLAN sensing measurement.

Further, the SBP initiating device receives the second SBP report frame including remaining sensing measurement results of the WLAN sensing measurement sent by the SBP responding device, so as to obtain all the sensing measurement results of the WLAN sensing measurement by receiving the first SBP report frame and the second SBP report frame.

In the communication method applied to the SBP initiating device provided in the present disclosure, the first indication information is at least one of first identification information or second identification information.

The first identification information is used to indicate the number of the sensing measurement results included in the first SBP report frame. And in the case where the length of the A-MPDU frame determined according to all the sensing measurement results of the WLAN sensing measurement exceeds the preset length, the number of the sensing measurement results included in the first SBP report frame is less than the number of all STAs participating in the WLAN sensing measurement.

That is, while the SBP responding device indicates through the first identification information that the number of the sensing measurement results included in the first SBP report frame is less than the number of all STAs participating in the WLAN sensing measurement, it also indicates that the SBP responding device will subsequently send the remaining sensing measurement results to the SBP initiating device, and the SBP initiating device thus determines that it needs to subsequently continue to receive the sensing measurement results sent by the SBP responding device.

The first identification information may be identified by at least one bit, for example, 3 bits may be used to identify the number of the sensing measurement results included in the first SBP report frame.

The second identification information is used to indicate the SBP initiating device to receive the second SBP report frame after receiving the first SBP report frame, and the second SBP report frame includes the remaining sensing measurement results of the WLAN sensing measurement.

In the case where the length of the A-MPDU frame determined according to all sensing measurement results of the WLAN sensing measurement exceeds the preset length, the first SBP report frame may include first identification information and/or second identification information to indicate through the first identification information and/or the second identification information that the first SBP report frame includes only part of the sensing measurement results of the WLAN sensing measurement, and thereby it is determined that the sensing measurement results sent by the SBP responding device need to be received subsequently.

The second identification information may be identified by at least one bit, for example, one bit may be used to identify that the second SBP report frame is sent after the first SBP report frame is sent.

In the communication method applied to the SBP initiating device provided in the present disclosure, the second SBP report may also include identification information for indicating the number of the sensing measurement results included in the second SBP report frame, and it may also be identified by at least one bit.

In the communication method applied to the SBP initiating device provided in the present disclosure, in the case where the length of the A-MPDU frame determined according to all sensing measurement results of the WLAN sensing measurement does not exceed the preset length, the first SBP report frame includes third identification information.

The third identification information is used to indicate the number of the sensing measurement results included in the first SBP report frame, and the number of the sensing measurement results included in the first SBP report frame is consistent with the number of all STAs participating in the WLAN sensing measurement.

That is, in the case where the length of the A-MPDU frame determined according to all sensing measurement results of the WLAN sensing measurement exceeds the preset length, the first SBP report frame indicates through the third identification information that the first SBP report frame includes the sensing measurement results of all STAs participating in the WLAN sensing measurement.

The third identification information may be identified by at least one bit, for example, 3 bits may be used to identify the number of the sensing measurement results included in the first SBP report frame.

In the communication method applied to the SBP initiating device provided in the present disclosure, the first SBP report frame further includes fourth identification information corresponding to each sensing measurement result included in the first SBP report frame, and each fourth identification information is used to indicate the STA corresponding to the sensing measurement result corresponding to the identification information.

After receiving the first SBP report frame, the SBP initiating device may determine the STA corresponding to each sensing measurement result according to the fourth identification information corresponding to each sensing measurement result included in the first SBP report frame.

The fourth identification information of each sensing measurement result can correspond to an independent identification bit.

Each fourth identification information can be any one of a UID, a MAC address, or an AID if association with the SBP responding device is established, of the STA corresponding to the respective sensing measurement result. That is, each fourth identification information can indicate the STA corresponding to the respective sensing measurement result through any one of the AID, UID, or MAC address.

Optionally, when each fourth identification information is the UID or MAC, it may also be used to indicate that an association is not established between the STA corresponding to the sensing measurement result corresponding to the fourth identification information and the SBP responding device.

In the communication method applied to the SBP initiating device provided in the present disclosure, the second SBP report frame further includes fifth identification information corresponding to each sensing measurement result included in the second SBP report frame, and each fifth identification information is used to indicate the STA corresponding to the sensing measurement result corresponding to the identification information.

After receiving the second SBP report frame, the SBP initiating device may determine the STA corresponding to each sensing measurement result according to the fifth identification information corresponding to each sensing measurement result included in the second SBP report frame.

The fifth identification information of each sensing measurement result may correspond to an independent identification bit.

Each fifth identification information can be any one of a UID, a MAC address, or an AID if the association with the SBP responding device is established, of the STA corresponding to the respective sensing measurement result. That is, each fifth identification information can indicate the STA corresponding to the respective sensing measurement result through any one of the AID, UID, or MAC address.

Optionally, when each fifth identification information is the UID or MAC, it may also be used to indicate that an association is not established between the STA corresponding to the sensing measurement result corresponding to the fifth identification information and the SBP responding device.

In the communication method applied to the SBP initiating device provided by the present disclosure, the first SBP report frame and the second SBP report frame are A-MPDU frames.

Specifically, in the case where the length of the A-MPDU frame determined according to all the sensing measurement results of the WLAN sensing measurement exceeds the preset length, the SBP initiating device receives the first A-MPDU frame sent by the SBP responding device.

The length of the first A-MPDU frame does not exceed the preset length.

The first A-MPDU frame may indicate, through the first indication information, that the first A-MPDU frame includes part of the sensing measurement results of the WLAN sensing measurement.

The first indication information of the first A-MPDU frame may be first identification information used to indicate that the number of the sensing measurement results included in the first A-MPDU frame is less than the number of all STAs participating in the WLAN sensing measurement, and/or used to indicate the SBP initiating device to receive a second A-MPDU frame after receiving the first A-MPDU frame, where the second A-MPDU frame includes the remaining sensing measurement results of the WLAN sensing measurement.

The first A-MPDU frame includes fourth identification information corresponding to each sensing measurement result, and each fourth identification information is used to indicate the STA corresponding to the respective sensing measurement result.

Further, after receiving the first A-MPDU frame, the SBP initiating device receives the second A-MPDU frame sent by the SBP responding device.

The second A-MPDU frame includes fifth identification information corresponding to each sensing measurement result, and each fifth identification information is used to indicate the STA corresponding to the respective sensing measurement result.

The length of the second A-MPDU frame does not exceed a preset length.

Optionally, in the case where the length of the A-MPDU frame determined according to all the sensing measurement results of the WLAN sensing measurement does not exceed a preset length, the SBP initiating device receives the first A-MPDU frame sent by the SBP responding device.

The first A-MPDU frame includes all sensing measurement results of the WLAN sensing measurement.

The first A-MPDU frame includes fourth identification information corresponding to each sensing measurement result, and each fourth identification information is used to indicate the STA corresponding to the respective sensing measurement result.

In the communication method applied to the SBP initiating device provided in the present disclosure, in the case where the length of the A-MPDU frame determined according to all sensing measurement results of the WLAN sensing measurement exceeds a preset length, the SBP responding device will send a second SBP report frame after sending the first SBP report frame.

The SBP responding device may receive the second SBP report frame after receiving the first SBP report frame.

In the case where the length of the A-MPDU frame determined according to the remaining sensing measurement results except the sensing measurement results included in the first SBP report frame still exceeds the preset length, the second SBP report frame may indicate through the second indication information that the number of the sensing measurement results included in the first SBP report frame and the second SBP report frame is less than the number of all STAs participating in the WLAN sensing measurement.

The second indication information may be at least one of sixth identification information, seventh identification information or eighth identification information.

The sixth identification information is used to indicate that the SBP initiating device needs to receive the sensing measurement results sent by the SBP responding device again after receiving the second SBP report frame. In this case, the SBP responding device will send a third SBP report frame again after sending the second SBP report frame so as to send the final remaining sensing measurement results to the SBP initiating device, and the SBP initiating device will receive the third SBP report frame again after receiving the second SBP report frame.

The seventh identification information is used to indicate identification information of the number of the sensing measurement results included in the second SBP report frame. In this case, after receiving the first SBP report frame and the second SBP report frame, the SBP initiating device compares the number of the sensing measurement results included in both the first SBP report frame and the second SBP report frame with the number of all STAs participating in the WLAN sensing measurement, and when the number of the sensing measurement results included in both the first SBP report frame and the second SBP report frame is less than the number of all STAs participating in the WLAN sensing measurement, it determines that it needs to receive the sensing measurement results sent by the SBP responding device again.

The eighth identification information is used to indicate the number of the sensing measurement results included in the first SBP report frame and the second SBP report frame, and this number is smaller than the number of all STAs participating in the WLAN sensing measurement.

Further, after receiving the second SBP report frame, the SBP initiating device receives a third SBP report frame sent by the SBP responding device, where the third SBP report frame includes the final remaining sensing measurement results.

The third SBP report frame may be an A-MPDU frame.

The third SBP report frame may include ninth identification information corresponding to each sensing measurement result included in the third SBP report frame, and each ninth identification information is used to indicate the STA corresponding to the respective sensing measurement result.

The embodiment of the present disclosure provides a method for sending a SBP report frame to an SBP initiating device by an SBP responding device, where the SBP responding device may send a first SBP report frame to the SBP initiating device in the case where a length of an A-MPDU frame determined based on all sensing measurement results of the WLAN sensing measurement exceeds a preset length, and indicate through first indication information that the first SBP report frame includes part of the sensing measurement results of the WLAN sensing measurement, and then send a second SBP report frame including the remaining sensing measurement results to the SBP initiating device after sending the first SBP report frame.

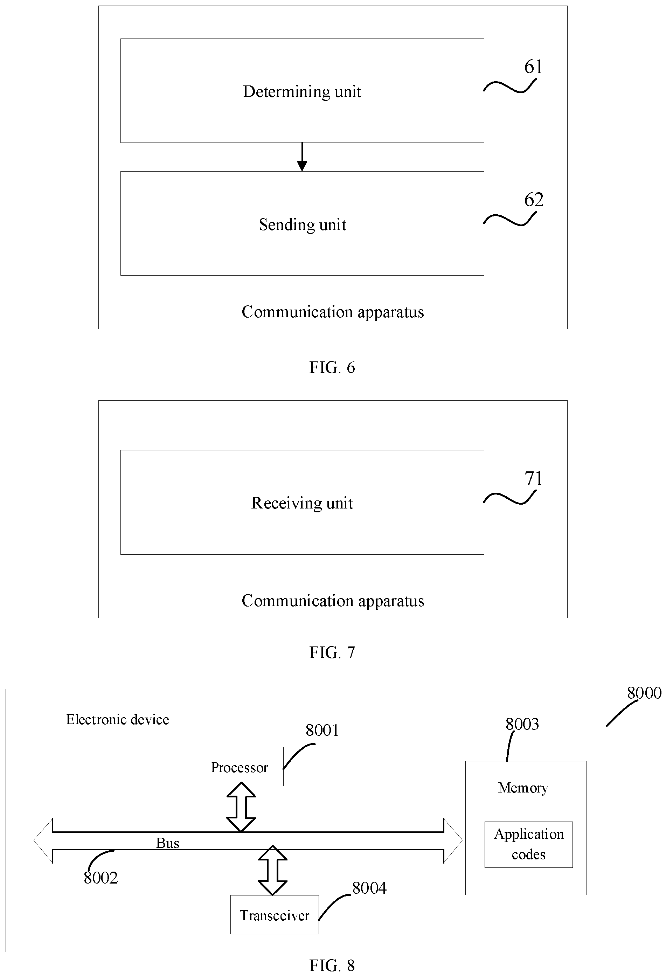

As shown in FIG. 6, an embodiment of the present disclosure provides a communication apparatus, including:
a determining unit 61, configured to determine a first SBP report frame, where in a case where a length of an aggregated media access control protocol data unit (A-MPDU) frame determined according to all sensing measurement results of a wireless local area network (WLAN) sensing measurement exceeds a preset length, the first SBP report frame indicates through first indication information that the first SBP report frame includes part of the sensing measurement results of the WLAN sensing measurement; and
a sending unit 62, configured to send the first SBP report frame.

Optionally, in an embodiment of the present disclosure, in the case where the length of the A-MPDU frame determined according to all the sensing measurement results of the WLAN sensing measurement exceeds the preset length, after sending first SBP report frame is sent, the determining unit 61 is further configured to:
determine a second SBP report frame, where the second SBP report frame includes the remaining sensing measurement results of the WLAN sensing measurement; and
the sending unit 62 is further configured to:
send the second SBP report frame.

Optionally, in an embodiment of the present disclosure, the first indication information is at least one of first identification information or second identification information, the first identification information is used to indicate the number of the sensing measurement results included in the first SBP report frame, and the number of the sensing measurement results included in the first SBP report frame is less than the number of all station devices (STAs) participating in the WLAN sensing measurement; and
the second identification information is used to indicate the SBP initiating device to receive the second SBP report frame after receiving the first SBP report frame, and the second SBP report frame includes the remaining sensing measurement results of the WLAN sensing measurement.

Optionally, in an embodiment of the present disclosure, in the case where the length of the A-MPDU frame determined according to all the sensing measurement results of the WLAN sensing measurement does not exceed the preset length, the first SBP report frame includes third identification information, where the third identification information is used to indicate the number of the sensing measurement results included in the first SBP report frame, and the number of sensing measurement results included in the first SBP report frame is consistent with the number of all STAs participating in the WLAN sensing measurement.

Optionally, in an embodiment of the present disclosure, the first SBP report frame further includes fourth identification information corresponding to each sensing measurement result included in the first SBP report frame, and each of the fourth identification information is used to indicate the STA corresponding to the respective sensing measurement result; and
the second SBP report frame further includes fifth identification information corresponding to each sensing measurement result included in the second SBP report frame, and each of the fifth identification information is used to indicate the STA corresponding to the respective sensing measurement result.

Optionally, in an embodiment of the present disclosure, the first SBP report frame and the second SBP report frame are A-MPDU frames.

Optionally, in an embodiment of the present disclosure, before the first SBP report frame is determined, the sending unit 62 is further configured to:
send a trigger frame (TF) to each STA participating in the WLAN sensing measurement; and
obtain the sensing measurement result of each STA participating in the WLAN sensing measurement.

As shown in FIG. 7, an embodiment of the present disclosure provides a communication apparatus, including:
a receiving unit 71, configured to receive a first SBP report frame, where in a case where a length of an aggregated media access control protocol data unit (A-MPDU) frame determined according to all sensing measurement results of a wireless local area network (WLAN) sensing measurement exceeds a preset length, the first SBP report frame indicates through first indication information that the first SBP report frame includes part of the sensing measurement results of the WLAN sensing measurement.

Optionally, in an embodiment of the present disclosure, in the case where the length of the A-MPDU frame determined according to all the sensing measurement results of the WLAN sensing measurement exceeds the preset length, after receiving the first SBP report frame, the receiving unit 71 is further configured to:
receive a second SBP report frame, where the second SBP report frame includes remaining sensing measurement results of the WLAN sensing measurement.

Optionally, in an embodiment of the present disclosure, the first indication information is at least one of first identification information or second identification information, the first identification information is used to indicate the number of the sensing measurement results included in the first SBP report frame, and the number of the sensing measurement results included in the first SBP report frame is less than the number of all station devices (STAs) participating in the WLAN sensing measurement;
the second identification information is used to indicate the SBP initiating device to receive the second SBP report frame after receiving the first SBP report frame, and the second SBP report frame includes the remaining sensing measurement results of the WLAN sensing measurement.

Optionally, in an embodiment of the present disclosure, in the case where the length of the A-MPDU frame determined according to all the sensing measurement results of the WLAN sensing measurement does not exceed the preset length, the first SBP report frame includes third identification information, the third identification information is used to indicate the number of the sensing measurement results included in the first SBP report frame, and the number of the sensing measurement results included in the first SBP report frame is consistent with the number of all STAs participating in the WLAN sensing measurement.

Optionally, in an embodiment of the present disclosure, the first SBP report frame further includes fourth identification information corresponding to each sensing measurement result included in the first SBP report frame, and each of the fourth identification information is used to indicate the STA corresponding to the respective sensing measurement result;
the second SBP report frame further includes fifth identification information corresponding to each sensing measurement result included in the second SBP report frame, and each of the fifth identification information is used to indicate the STA corresponding to the respective sensing measurement result.

Optionally, in an embodiment of the present disclosure, the first SBP report frame and the second SBP report frame are A-MPDU frames.

An embodiment of the present disclosure also provides an electronic device, as shown in FIG. 8, the electronic device 8000 shown in FIG. 8 includes: a processor 8001 and a memory 8003. The processor 8001 and the memory 8003 are connected, such as through a bus 8002. Optionally, the electronic device 8000 may also include a transceiver 8004. It should be noted that in actual applications, the number of the transceiver 8004 is not limited to one, and the structure of the electronic device 8000 does not constitute a limitation on the embodiments of the present disclosure.

The memory is configured to store application codes in the embodiments of the present disclosure, and the execution thereof is controlled by the processor 8001. When the electronic device 8000 acts as an SBP responding device, the processor 8001 is configured to execute the application codes stored in the memory 8003 to implement the communication methods applicable to the SBP responding device in the present disclosure. When the electronic device 8000 acts as an SBP initiating device, the processor 8001 is configured to execute the application codes stored in the memory 8003 to implement the communication methods applicable to the SBP initiating device in the present disclosure.

The bus 8002 may include a path for transmitting information between the above components. The bus 8002 may be a Peripheral Component Interconnect (PCI) bus, an Extended Industry Standard Architecture (EISA) bus, or the like. The bus 8002 may be divided into an address bus, a data bus, a control bus, etc. For ease of representation, FIG. 8 shows only in one thick line, but it does not indicate that there is only one bus or one type of bus.

The memory 8003 can be a read-only memory (ROM) or other types of static storage devices that can store static information and instructions, a random access memory (RAM) or other types of dynamic storage devices that can store information and instructions, or an electrically erasable programmable read-only memory (EEPROM), a compact disc read-only memory (CD-ROM) or other optical disk storage, optical disc storage (including compressed optical disc, laser disc, optical disc, digital versatile disc, Blu-ray disc, etc.), a magnetic disk storage medium or other magnetic storage device, or any other medium that can be used to carry or store the desired program codes in the form of instructions or data structure and can be accessed by a computer, but is not limited to these.

An embodiment of the present disclosure provides a computer-readable storage medium, on which a computer program is stored, and the computer program, when running on a computer, causes the computer to perform the corresponding contents in the aforementioned method embodiments.

It should be understood that, although the steps in the flowcharts of the accompanying drawings are displayed in sequence as indicated by the arrows, these steps are not necessarily executed in sequence in the order indicated by the arrows. Unless otherwise specified herein, there is no strict restriction on the execution order of these steps, and they can be executed in other orders. Moreover, at least a part of the steps in the flowchart of the accompanying drawings may include multiple sub-steps or multiple stages, and these sub-steps or stages are not necessarily executed at the same time, but can be executed at different times, and the execution order thereof is not necessarily sequential, but can be executed in turn or alternately with other steps or at least a part of the sub-steps or stages of other steps.

It should be noted that the computer-readable storage medium mentioned above in the present disclosure may be a computer-readable signal medium, a computer-readable storage medium, or any combination of the two. The computer-readable storage medium may be, but is not limited to, for example, an electrical, magnetic, optical, electromagnetic, infrared, or semiconductor system, apparatus or device, or any combination of the above. More specific examples of the computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium may be any tangible medium containing or storing a program that can be used by or in combination with an instruction execution system, apparatus or device. In the present disclosure, the computer-readable signal medium may include a data signal propagated in a baseband or as part of a carrier wave, which carries the computer-readable program codes. The propagated data signal may take a variety of forms, including but not limited to an electromagnetic signal, an optical signal, or any suitable combination of the above. The computer readable signal medium may also be any computer readable storage medium other than a computer readable storage medium, which may send, propagate or transmit a program for use by or in conjunction with an instruction execution system, apparatus or device. The program codes contained on the computer readable storage medium may be transmitted using any suitable medium, including but not limited to: wires, optical cables, RF (radio frequency), etc., or any suitable combination of the above.

The computer-readable storage medium may be included in the wireless local area network initiating device or responding device; or may exist independently without being assembled into the wireless local area network initiating device or responding device.

The computer-readable storage medium carries one or more programs. When the one or more programs are executed by the wireless local area network initiating device or responding device, the initiating device or responding device is caused to perform the corresponding communication methods.

According to an aspect of the present disclosure, a computer program product or a computer program is provided, the computer program product or the computer program including computer instructions, the computer instructions being stored in a computer-readable storage medium. A processor of a computer device reads the computer instructions from the computer-readable storage medium, and the processor executes the computer instructions, to cause the computer device to perform the communication methods provided in the above various optional implementations.

The computer program codes for performing the operations of the present disclosure may be written in one or more programming languages or a combination thereof, including object-oriented programming languages such as Java, Smalltalk, or C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In cases involving the remote computer, the remote computer may be connected to the user's computer through any type of network, including a local area network (LAN) or a wide area network (WAN), or may be connected to an external computer (e.g., via the Internet using an Internet service provider).

The flow charts and block diagrams in the accompanying drawings illustrate the possible architectures, functions and operations of the system, method and computer program product according to various embodiments of the present disclosure. In this regard, each box in the flow chart or block diagram can represent a module, a program segment or a part of codes, and the module, the program segment or the part of the codes contains one or more executable instructions for realizing the specified logical function. It should also be noted that in some implementations as alternatives, the functions marked in the boxes can also occur in a sequence different from that marked in the accompanying drawings. For example, two boxes represented in succession can actually be executed substantially in parallel, and they can sometimes be executed in the opposite order, depending on the functions involved. It should also be noted that each box in the block diagram and/or flow chart, and the combination of the boxes in the block diagram and/or flow chart can be implemented with a dedicated hardware-based system that performs a specified function or operation, or can be implemented with a combination of dedicated hardware and computer instructions.

The modules involved in the embodiments described in the present disclosure may be implemented by software or hardware. The name of the module does not constitute a limitation on the module itself in some cases. For example, module A may also be described as "module A configured to perform operation B".

Those descried above is only preferred embodiments of the present disclosure and explanation of the technical principles employed. Those skilled in the art should understand that the disclosure scope involved in the present disclosure is not limited to the technical solutions formed by a specific combination of the above technical features, but should also cover other technical solutions formed by any combination of the above technical features or their equivalent features without departing from the disclosed concept, for example, the technical solutions form by replacing the above features with (but not limited to) technical features with similar functions to those disclosed in the present disclosure.

## Claims

1. A communication method, applied to a Sensing By Proxy, SBP, responding device, the method comprising:
determining a first SBP report frame, wherein in a case where a length of an Aggregated Media Access Control Protocol Data Unit, A-MPDU, frame determined according to all sensing measurement results of a Wireless Local Area Network, WLAN, sensing measurement exceeds a preset length, the first SBP report frame indicates through first indication information that the first SBP report frame comprises part of the sensing measurement results of the WLAN sensing measurement; and
sending the first SBP report frame.

2. The method according to claim 1, wherein in the case where the length of the A-MPDU frame determined according to all the sensing measurement results of the WLAN sensing measurement exceeds the preset length, after sending the first SBP report frame, the method further comprises:
determining a second SBP report frame, wherein the second SBP report frame comprises remaining sensing measurement results of the WLAN sensing measurement; and
sending the second SBP report frame.

3. The method according to claim 1, wherein the first indication information is at least one of first identification information or second identification information, the first identification information is used to indicate the number of the sensing measurement results comprised in the first SBP report frame, and the number of the sensing measurement results comprised in the first SBP report frame is less than the number of all Station devices, STAs, participating in the WLAN sensing measurement, and
the second identification information is used to indicate a SBP initiating device to receive a second SBP report frame after receiving the first SBP report frame, and the second SBP report frame comprises remaining sensing measurement results of the WLAN sensing measurement.

4. The method according to claim 1, wherein in a case where the length of the A-MPDU frame determined according to all the sensing measurement results of the WLAN sensing measurement does not exceed the preset length, the first SBP report frame comprises third identification information, the third identification information is used to indicate the number of the sensing measurement results comprised in the first SBP report frame, and the number of the sensing measurement results comprised in the first SBP report frame is consistent with the number of all STAs participating in the WLAN sensing measurement.

5. The method according to any one of claims 2 to 4,wherein the first SBP report frame further comprises fourth identification information corresponding to each sensing measurement result comprised in the first SBP report frame, and each of the fourth identification information is used to indicate an STA corresponding to the respective sensing measurement result; and
the second SBP report frame further comprises fifth identification information corresponding to each sensing measurement result comprised in the second SBP report frame, and each of the fifth identification information is used to indicate an STA corresponding to the respective sensing measurement result.

6. The method according to claim 2, wherein the first SBP report frame and the second SBP report frame are A-MPDU frames.

7. The method according to claim 1, wherein before determining the first SBP report frame, the method further comprises:
sending a Trigger Frame, TF, to each STA participating in the WLAN sensing measurement; and
obtaining the sensing measurement result of each STA participating in the WLAN sensing measurement.

8. A communication method, applied to a Sensing By Proxy, SBP, initiating device, the method comprising:
receiving a SBP report frame, wherein in a case where a length of an Aggregated Media Access Control Protocol Data Unit, A-MPDU, frame determined based on all sensing measurement results of a Wireless Local Area Network, WLAN, sensing measurement exceeds a preset length, the first SBP report frame indicates through first indication information that the first SBP report frame comprises part of sensing measurement results of the WLAN sensing measurement.

9. The method according to claim 8, wherein in the case where the length of the A-MPDU frame determined according to all the sensing measurement results of the WLAN sensing measurement exceeds the preset length, after receiving the first SBP report frame, the method further comprises:
receiving a second SBP report frame, wherein the second SBP report frame comprises remaining sensing measurement results of the WLAN sensing measurement.

10. The method according to claim 8, wherein the first indication information is at least one of first identification information or second identification information, the first identification information is used to indicate the number of the sensing measurement results comprised in the first SBP report frame, and the number of the sensing measurement results comprised in the first SBP report frame is less than the number of all Station devices, STAs, participating in the WLAN sensing measurement, and
the second identification information is used to indicate the SBP initiating device to receive a second SBP report frame after receiving the first SBP report frame, wherein the second SBP report frame comprises remaining sensing measurement results of the WLAN sensing measurement.

11. The method according to claim 8, wherein in a case where the length of the A-MPDU frame determined according to all the sensing measurement results of the WLAN sensing measurement does not exceed the preset length, the first SBP report frame comprises third identification information, the third identification information is used to indicate the number of the sensing measurement results comprised in the first SBP report frame, and the number of the sensing measurement results comprised in the first SBP report frame is consistent with the number of all STAs participating in the WLAN sensing measurement.

12. The method according to any one of claims 9 to 11, wherein the first SBP report frame further comprises fourth identification information corresponding to each sensing measurement result comprised in the first SBP report frame, and each of the fourth identification information is used to indicate an STA corresponding to the respective sensing measurement result; and
the second SBP report frame further comprises fifth identification information corresponding to each sensing measurement result comprised in the second SBP report frame, and each of the fifth identification information is used to indicate an STA corresponding to the respective sensing measurement result.

13. The method according to claim 9, wherein the first SBP report frame and the second SBP report frame are A-MPDU frames.

14. A communication apparatus, the apparatus comprising:
a determining unit, configured to determine a first SBP report frame, wherein in a case where a length of an Aggregated Media Access Control Protocol Data Unit, A-MPDU, frame determined according to all sensing measurement results of a Wireless Local Area Network, WLAN, sensing measurement exceeds a preset length, the first SBP report frame indicates through first indication information that the first SBP report frame comprises part of the sensing measurement results of the WLAN sensing measurement; and
a sending unit, configured to send the first SBP report frame.

15. A communication apparatus, the apparatus comprising:
a receiving unit, configured to receive a first SBP report frame, wherein in a case where a length of an Aggregated Media Access Control Protocol Data Unit, A-MPDU, frame determined based on all sensing measurement results of a Wireless Local Area Network, WLAN, sensing measurement exceeds a preset length, the first SBP report frame indicates through first indication information that the first SBP report frame comprises part of the sensing measurement results of the WLAN sensing measurement.

16. An SBP responding device, wherein the SBP responding device comprises a memory, a processor, and a computer program that is stored in the memory and executable on the processor, and the processor, when executing the program, implements the method according to any one of claims 1 to 7.

17. An SBP initiating device, wherein the SBP initiating device comprises a memory, a processor and a computer program that is stored in the memory and executable on the processor, and the processor, when executing the program, implements the method according to any one of claims 8 to 13.

18. A computer-readable storage medium, wherein a computer program is stored on the computer-readable storage medium, and the computer program, when being executed by a processor, implements the method according to any one of claims 1 to 13.
